# EUROPÄISCHE PATENTSCHRIFT

(11) **EP 1 899 683 B1**
(45) Veröffentlichungstag und Bekanntmachung des Hinweises auf die Patenterteilung: **05.11.2008**
(21) Anmeldenummer: 06741668.5
(22) Anmeldetag: 26.06.2006
(51) Int. Cl.: G01D 5/347, B23Q 17/22, F16C 29/06, G01D 5/245

(54) **LINEARFÜHRUNGSSYSTEM MIT VORRICHTUNG ZUR POSITIONSMESSUNG**
LINEAR GUIDING SYSTEM COMPRISING A POSITION MEASURING DEVICE
SYSTEME DE GUIDAGE LINEAIRE COMPRENANT UN DISPOSITIF DE MESURE DE POSITION

(30) Priorität: 06.07.2005 EP 05405427
(43) Veröffentlichungstag der Anmeldung: 19.03.2008
(73) Patentinhaber: Schneeberger Holding AG, 4914 Roggwil (CH)
(72) Erfinder: SCHNEEBERGER, Hans-Martin, CH-4900 Langenthal (CH); MISCHLER, Ernst, CH-4914 Roggwil BE (CH); RAMONAT, Lutz, 77654 Offenburg (DE)
(74) Vertreter: EGLI-EUROPEAN PATENT ATTORNEYS
(86) Internationale Anmeldenummer: PCT/CH2006/000343
(87) Internationale Veröffentlichungsnummer: WO 2007/003065

(56) Entgegenhaltungen:
- WO-A-91/16594
- DE-A1- 10 064 734
- US-A- 5 289 088
- US-A- 5 945 824
- US-A- 5 987 768
- US-A- 6 031 224

## Beschreibung

Die Erfindung betrifft ein Linearführungssystem mit einer Messeinrichtung zum Messen des von einem beweglichen Führungswagen gegenüber einer Führungsschiene zurückgelegten Weges und/oder zum Bestimmen einer Position des Führungswagens bezüglich der Führungsschiene.

Aus DE 197 42 081 ist ein Linearführungssystem bekannt, welches einen über Wälzkörper auf einer Führungsschiene abgestützten und längs der Führungsschiene bewegbaren Führungswagen und eine Messeinrichtung zum Messen eines von dem Führungswagen zurückgelegten Weges aufweist. Die Messeinrichtung umfasst einen Massstab und einen Messkopf mit mindestens einem Sensor zum Abtasten des Massstabs, wobei der Massstab an einer dem Führungswagen zugewandten Fläche der Führungsschiene angeordnet ist und im Führungswagen eine Ausnehmung zur Aufnahme des Messkopfes ausgebildet ist. Die Ausnehmung ist eine Nut, die im wesentlichen in der Mitte des Führungswagens und insbesondere in der Mitte der Tragzone des Führungswagens ausgebildet ist und ausserdem eine (senkrecht zur Führungsschiene) durchgehende Öffnung im Führungswagen darstellt. Eine derartige Ausnehmung führt zu einer verringerten Tragfähigkeit, Steifigkeit und/oder Lebensdauer des Linearführungssystems und beeinträchtigt wegen der Reduktion der Steifigkeit - abhängig von einer auf den Führungswagen wirkenden Last - die Messgenauigkeit der Messeinrichtung.

Aus WO 91/16594 ist ein Linearführungssystem mit einem längs einer Führungsschiene bewegbaren Führungswagen und einer Messeinrichtung zum Messen eines von dem Führungswagen zurückgelegten Weges bekannt, welche Messeinrichtung einen an der Führungsschiene angeordneten Massstab und einen Messkopf zum Abtasten des Massstabs umfasst, wobei der Messkopf in einem separaten Gehäuse untergebracht ist, welches an einer (in die Bewegungsrichtung des Führungswagens weisenden) Stirnseite des Führungswagens montiert ist. Dieses Linearführungssystem hat den Nachteil, dass für den beweglichen Teil des Linearführungssystems (d. h. für den Führungswagen und den Messkopf in Verbindung mit dem den Messkopf enthaltenden Gehäuse) ein grösserer Bauraum in Bewegungsrichtung erforderlich ist (im Vergleich mit einer Linearführung ohne einen entsprechenden Messkopf) und somit der zur Verfügung stehende Hub des Linearführungssystems in der Bewegungsrichtung des Führungswagens reduziert ist. Sowohl der Messkopf als auch das Gehäuse muss mit geringen Toleranzen relativ zum Führungswagen positioniert werden, um eine hohe Messgenauigkeit der Messeinrichtung zu gewährleisten. Die Montage der Messeinrichtung ist deshalb aufwändig und somit kostspielig (bedingt durch die Zahl der zu montierenden Einzelteile, die bei der Montage einzuhaltenden Toleranzen, etc.).

Der Erfindung liegt die Aufgabe zugrunde, die genannten Nachteile zu vermeiden und ein Linearführungssystem mit einem längs einer Führungsschiene beweglichen Führungswagen und mit einer Messeinrichtung zum Messen eines von dem Führungswagen bezüglich der Führungsschiene zurückgelegten Weges derart bereitzustellen, dass der Führungswagen zusammen mit der Messeinrichtung in einer kompakten Bauweise realisierbar und mit möglichst geringem Montageaufwand herstellbar ist und das Linearführungssystem eine möglichst hohe Tragfähigkeit und/oder Steifigkeit aufweist.

Diese Aufgabe wird durch ein Linearführungssystem mit den Merkmalen des Anspruchs 1 gelöst.

Das erfindungsgemässe Linearführungssystem umfasst zumindest eine Führungsschiene, zumindest einen Führungswagen, der über Wälzkörper auf der Führungsschiene abgestützt und längs der Führungsschiene bewegbar ist, und eine Messeinrichtung zum Messen eines von dem Führungswagen bezüglich der Führungsschiene zurückgelegten Weges und/oder zum Bestimmen einer Position des Führungswagens bezüglich der Führungsschiene. Die Messeinrichtung umfasst einen Massstab und einen Messkopf mit mindestens einem Sensor zum Abtasten des Massstabs, wobei der Massstab sich in der Längsrichtung der Führungsschiene erstreckt und an oder auf einer der Tragzone des Führungswagens zugewandten Fläche der Führungsschiene angeordnet ist und im Führungswagen eine Ausnehmung zur Aufnahme des Messkopfes ausgebildet ist.

Es ist vorausgesetzt, dass der Führungswagen aus einem Grundkörper, der zur Aufnahme einer auf den Führungswagen wirkenden Last bestimmt ist, und der Gesamtheit aller Wälzkörper (und gegebenenfalls weiterer Bauteile, die unmittelbar zur Führung der Wälzkörper benötigt werden) besteht. Als "Tragzone" wird in diesem Zusammenhang der Teil des Grundkörpers angesehen, der direkt zwischen den Wälzkörpern liegt und demgemäss am Rand durch die Wälzkörper getragen bzw. über die Wälzkörper auf der Führungsschiene gestützt ist. Bauteile, die an dem Grundkörper befestigt sind und nicht zur Aufnahme der Last dienen, werden in diesem Zusammenhang nicht als Bestandteil des Führungswagens angesehen. Die Steifigkeit des Führungswagens wird wesentlich bestimmt durch seine Steifigkeit im Bereich der Tragzone.

Die oben genannte Aufgabe wird gemäss der Erfindung dadurch gelöst, dass die Ausnehmung teilweise ausserhalb der Tragzone ausgebildet ist und der Messkopf ganz oder teilweise in der Ausnehmung und teilweise ausserhalb der Tragzone angeordnet ist.

Dadurch, dass der Messkopf in einer Ausnehmung im Führungswagen angeordnet ist, kann der Führungswagen kompakt gebaut werden (hinsichtlich seiner Erstreckung in der Bewegungsrichtung des Führungswagens und seiner Bauhöhe). Die Ausnehmung ermöglicht zusätzlich eine genaue Positionierung des Messkopfes (ohne aufwändige Justage) und eine Befestigung des Messkopfes unmittelbar am Führungswagen (d. h. ohne zusätzliches Gehäuse bzw. ohne zusätzliche Zwischenteile zwischen dem Messkopf und dem Führungswagen). Dies vereinfacht die Montage des Führungswagens in Verbindung mit der Messeinrichtung und erleichtert es, den Messkopf relativ zum Massstab derart zu montieren, dass eine hohe Messgenauigkeit der Messeinrichtung erzielt wird.

Dadurch, dass die Ausnehmung teilweise ausserhalb der Tragzone des Führungswagens ausgebildet ist, wird die Steifigkeit des Führungswagen durch die Ausnehmung nicht oder verhältnismässig wenig geschwächt (im Vergleich zu einem Führungswagen ohne Ausnehmung). Das Linearführungssystem hat deshalb eine verhältnismässig hohe Steifigkeit und eine verhältnismässig hohe Tragfähigkeit, selbst wenn der Messkopf in der Ausnehmung montiert ist. Letzteres erleichtert es zusätzlich, eine hohe Messgenauigkeit des Messkopfes beim Abtasten des Massstabs zu erzielen, und ist die Grundlage für eine besonders lange Lebensdauer und einen zuverlässigen Betrieb des Linearführungssystems.

In einer Ausführungsform des erfindungsgemässen Linearführungssystems ist die Ausnehmung an einem bezüglich der Bewegungsrichtung des Führungswagen vorderen oder hinteren Ende des Führungswagens angeordnet. In diesem Fall kann in vielen Fällen die Ausnehmung, die für die Aufnahme des Messkopfes benötigt wird, besonders klein ausgebildet sein (was die Steifigkeit des Führungswagens bzw. des Linearführungssystems besonders wenig verringert). Dies trifft insbesondere zu, wenn die Höhe des Messkopfes kleiner ist als die Höhe des Führungswagens und der Messkopf so gebaut und die Ausnehmung im Führungswagen so ausgebildet ist, dass der Messkopf vollständig im Führungswagen eingebettet werden kann. Wenn unter diesen Umständen die Ausnehmung am vorderen oder hinteren Ende des Führungswagens angeordnet ist, dann wird beispielsweise für die Unterbringung eines Kabels, das eine Verbindung zwischen dem Messkopf und externen Anschlüssen herstellt (beispielsweise für eine Stromversorgung oder für eine Verarbeitung von Sensorsignalen), besonders wenig Platz benötigt, da das Kabel im Bereich des Führungswagens nur über eine besonders kurze Distanz (zwischen dem Messkopf und dem vorderen oder hinteren Ende des Führungswagens) geführt werden muss. Je nach der Grösse des Abstands zwischen dem Messkopf und einem Ende bzw. Rand des Führungswagens kann das Kabel entweder über eine besonders kurze Nut (zur Führung des Kabels) oder ohne eine derartige Nut aus dem Führungswagen herausgeführt werden. Da eine solche Nut allenfalls die Tragfähigkeit des Linearführungssystems verringen kann, wird durch eine solche Anordnung des Messkopfs eine Schwächung der Tragfähigkeit vermieden oder zumindest substantiell verringert.

In einer weiteren Ausführungsform ist die Ausnehmung derart ausgebildet, dass sie eine Öffnung an einer von der Führungsschiene abgewandten Seite des Führungswagens aufweist. Die Öffnung kann so dimensioniert sein, dass der Messkopf in der Öffnung bzw. durch die Öffnung von der von der Führungsschiene abgewandten Seite des Führungswagen her montiert werden kann. Weiterhin kann die Öffnung zur Durchführung von Kabelverbindungen dienen. Diese Massnahmen ermöglichen einen einfachen.Einbau und Ausbau des Messkopfes und vereinfachen somit die Montage und die Wartung des Messkopfes.

Bei einer weiteren Ausführungsform ist vorgesehen, dass der Massstab an einem Rand einer der Tragzone des Führungswagens zugewandten Fläche der Führungsschiene und/oder in einem Bereich zwischen einem zentralen Bereich dieser Fläche und einem Rand der Fläche angeordnet ist. In diesem Fall ist der Massstab jeweils gegenüber einer Mittelachse (in der Längsrichtung) der Führungsschiene seitlich versetzt. Entsprechend ist die Ausnehmung zur Aufnahme des Messkopfes und der Messkopf im Führungswagen ebenfalls quer zur Mittelachse der Führungsschiene seitlich versetzt. Diese Variante bietet mehrere Vorteile hinsichtlich der Konstruktion der Messeinrichtung.

In der Regel sind in einem zentralen Bereich der Führungsschiene (insbesondere in der der Tragzone des Führungswagens zugewandten Fläche der Führungsschiene) mehrere Löcher ausgebildet, die zur Befestigung der Führungsschiene an einem Fundament oder einer anderen Unterlage mittels geeigneter Befestigungsmittel (beispielsweise Schrauben oder Nieten) dienen. In diesem Fall ist eine Anordnung des Massstabs im zentralen Bereich der Fläche mit Komplikationen verbunden, wenn eine hohe Messgenauigkeit der Messeinrichtung gewährleistet sein soll. Wegen des grossen Platzbedarfs der Löcher ist es beispielsweise schwierig, den Massstab lückenlos über die gesamte Länge der Fläche auszubilden. Letzteres wäre mit einer Montage (Befestigung an einem Fundament) der Führungsschiene nur vereinbar, wenn der Massstab an der Führungsschiene erst nach einer Montage der Führungsschiene angeordnet würde und vor einer Demontage der Führungsschiene wieder entfernt würde.

Die vorstehend genannte Ausführungsform bietet nun den Vorteil, dass der Massstab lückenlos über die gesamte Länge der Fläche ausgebildet werden kann, selbst wenn im zentralen Bereich der Führungsschiene Löcher zur Befestigung der Führungsschiene vorhanden sind. Zu diesem Zweck kann für den Massstab eine Fläche genutzt werden, die auf der einen Seite durch die Löcher und auf der anderen Seite durch einen Seitenrand der Führungsschiene begrenzt ist. In diesem Fall kann der Massstab permanent an der Führungsschiene angeordnet sein (unabhängig von einer Montage oder Demontage der Führungsschiene).

Im vorstehend genannten Fall hat die Befestigung der Führungsschiene einen weiteren Effekt, der für die Messgenauigkeit der Messeinrichtung von Bedeutung ist. Die Oberfläche der Führungsschiene kann nämlich beim Anbringen der jeweiligen Befestigungsmittel in der Umgebung der Befestigungsmittel verzogen werden. Dementsprechend ändert sich die Höhe der Führungsschiene (abhängig vom Abstand von den jeweiligen Befestigungsmitteln). Die Änderung der Höhe ist dabei am geringsten an den Schienenseiten sowie in der Mitte zwischen zwei Befestigungsmittel. Durch eine Anordnung des Massstabs am Rand oder in der Nähe des Randes der Führungsschiene wird im Falle der vorstehend genannten Ausführungsform erreicht, dass der Massstab in einem Bereich der Führungsschiene ausgebildet ist, die bei einer Montage der Führungsschiene besonders wenig deformiert wird. In diesem Fall wird der Zustand des Massstabs bei einer Montage besonders wenig (wenn überhaupt) beeinflusst. Daraus resultiert eine höhere Messgenauigkeit der Messeinrichtung.

Der Massstab umfasst in der Regel mehrere Marken, die jeweils eine Ortsinformation repräsentieren. Hinsichtlich der Marken soll hier lediglich vorausgesetzt werden, dass verschiedene Marken an verschiedenen Orten angeordnet sein sollen. Massstäbe mit derartigen Marken können konventionell auf verschiedene Weisen realisiert werden (beispielsweise durch eine Bearbeitung geeigneter Materialien mit mechanischen und/oder magnetischen und/oder optischen und/oder chemischen Mitteln).

Dementsprechend ist vorausgesetzt, dass der jeweilige Sensor des Messkopfes dafür geeignet ist, die jeweiligen Marken zu registrieren, um ein Abtasten des Massstabs und ein Erfassen der durch die jeweiligen Marken repräsentierten Ortsinformation zu ermöglichen. Je nach der Beschaffenheit der Marken sind demnach verschiedene Arten von Sensoren für diesen Zweck geeignet, beispielsweise Sensoren zum Abtasten der Marken mit magnetischen und/oder optischen und/oder mechanischen und/oder elektrischen und/oder akustischen Mitteln. Derartige Sensoren können den Massstab gegebenenfalls berührungslos abtasten oder zum Abtasten mit dem Massstab in Kontakt gebracht werden.

Der Massstab kann eine oder mehrere Spuren von Marken mit jeweils unterschiedlicher Funktion aufweisen: eine oder mehrere Inkrementalspuren und/oder eine eine oder mehrere Referenzmarken umfassende Referenzspur und/oder eine Spur mit einem sich längs der Führungsschiene erstreckenden, absoluten Codemarkenmuster (d.h. mit einer Spur von Marken, die den jeweiligen Ort eindeutig kennzeichnen und für jeden Ort eine absolute Positionsinformation codieren). Die jeweiligen Referenzmarken kennzeichnen jeweils einen spezifischen Ort eindeutig und repräsentieren deshalb jeweils eine absolute Ortsinformation. Die Inkrementalspur umfasst mehrere längs eines vorgegebenen Weges angeordnete Marken, die um vorgegebene Distanzen voneinander beäbstandet sind und an sich keine absolute Ortsinformation enthalten müssen. Ein Abtasten einer Reihe von Marken der Inkrementalspur liefert demnach eine Information über den beim Abtasten zurückgelegten Weg.

Falls der Massstab eine Inkrementalspur und eine Referenzspur aufweist, dann kann ein Sensor der Messrichtung so ausgebildet sein, dass sowohl die Inkrementalspur als auch die Referenzspur mit dem Sensor abtastbar ist. Dies ist insbesondere zweckmässig, wenn die Referenzmarken und die Marken der Inkrementalspur in einer gemeinsamen Spur angeordnet sind oder quer zur Bewegungsrichtung des Führungswagens derart dicht beieinander liegen, dass der Sensor - bei einer entsprechenden Anordnung - sowohl die Referenzmarken als auch die Marken der Inkrementalspur registrieren kann.

Alternativ kann der Messkopf einen ersten Sensor zum Abtasten der Inkrementalspur und einen zweiten Sensor zum Abtasten der Referenzspur aufweisen.

Weitere Einzelheiten der Erfindung und insbesondere beispielhafte Ausführungsformen des erfindungsgemässen Linearführungssystems werden im Folgenden anhand der beigefügten schematischen Zeichnungen erläutert. In den Zeichnungen zeigen :
- Fig. 1: eine perspektivische Darstellung einer ersten Ausführungsform des Linearführungssystems mit einer Führungsschiene, einem Führungswagen und einer Messeinrichtung, welche einen Massstab und eine Abtastvorrichtung zum Abtasten des Massstabs umfasst;
- Fig. 2: einen Abschnitt der Führungsschiene gemäss Figur 1 mit einem (schematisch dargestellten) Massstab der Messeinrichtung;
- Fig. 3: den Führungswagen gemäss Figur 1 mit einer Ausnehmung zur Aufnahme eines Messkopfes zum Abtasten des Massstabs;
- Fig. 4: die Abtastvorrichtung nach Figur 1 aus einer anderen Perspektive;
- Fig. 5: eine schematische Darstellung des Massstabs gemäss Fig. 1 mit einer Referenzspur und einer Inkrementalspur;
- Fig. 6: eine schematische Darstellung des Verziehens einer Oberfläche der Führungsschiene durch Befestigungsmittel (wobei das Ausmass der Deformation der Oberfläche übertrieben dargestellt ist);
- Fig. 7: der Führungswagen gemäss Fig. 1 mit einer Darstellung der Tragzone und
- Fig. 8: eine schematische Darstellung einer zweiten Ausführungsform des Linearführungssystems.

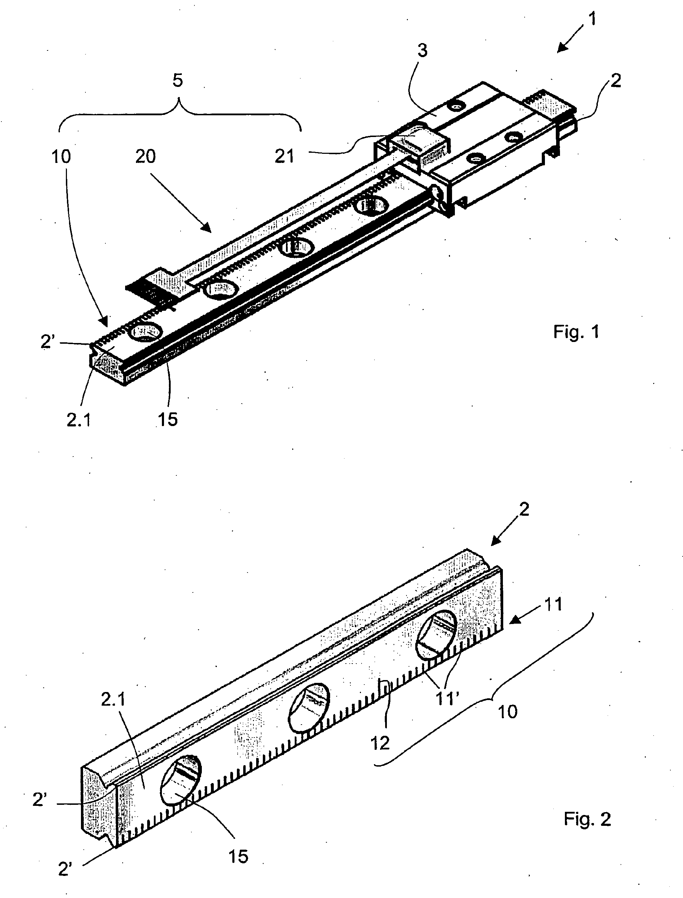

Figur 1 zeigt ein Linearführungssystem 1 gemäss der vorliegenden Erfindung mit einer Führungsschiene 2, einem auf der Führungsschiene 2 angeordneten und längs der Führungsschiene 2 bewegbaren Führungswagen 3 und eine Messeinrichtung 5 zum Messen eines von dem Führungswagen 3 bezüglich der Führungsschiene 2 zurückgelegten Weges und/oder zum Bestimmen einer Position des Führungswagens 3 bezüglich der Führungsschiene 2.

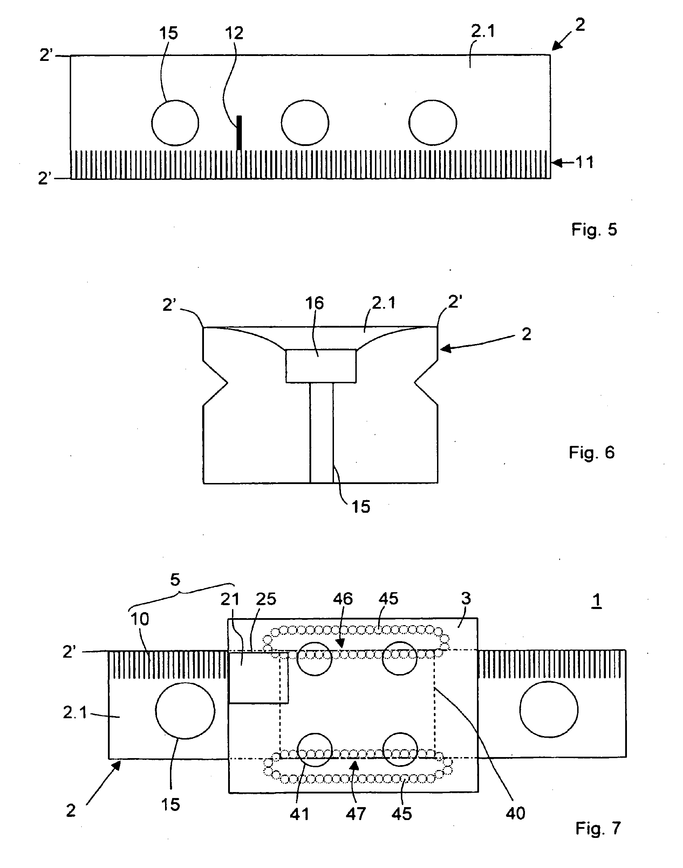

Der Führungswagen 3 ist auf der Führungsschiene 2 über Wälzkörper abgestützt, welche - wie im Zusammenhang mit Fig. 7 dargelegt ist - eine Tragzone 40 des Führungswagens 3 begrenzen.

Die Messeinrichtung 5 umfasst einen Massstab 10 und eine Abtastvorrichtung 20 mit einem Messkopf 21 zum Abtasten des Massstabs 10.

Wie die Fig. 1 und 2 zeigen, ist der Massstab 10 auf einer der Tragzone 40 des Führungswagens 3 zugewandten (oberen) Fläche 2.1 der Führungsschiene 2 und insbesondere an einem Rand 2' der Führungsschiene 2 ausgebildet. Im zentralen Bereich der Führungsschiene 2 sind Löcher 15 zum Befestigen der Führungsschiene 2 an hier nicht dargestellten Montageelementen vorhanden. Der Massstab 10 beansprucht Platz im wesentlichen in einem streifenförmigen Flächenbereich zwischen dem Rand 2' und den Löchern 15 und kann deshalb als linearer Massstab ausgebildet sein, der sich (ohne Unterbrechung) über die gesamte Länge der Führungsschiene 2 erstreckt.

Der Massstab 10 ist im vorliegenden Ausführungsbeispiel derart ausgebildet, dass ein optischer Sensor ihn abzutasten vermag. Alternativ ist es selbstverständlich im Rahmen der vorliegenden Erfindung auch möglich, den Massstab 10 so zu realisieren, dass er für ein anderes Abtastverfahren geeignet ist, z.B. für einen mechanischen Abtastvorgang, einen magnetischen Abtastvorgang oder gar einen akustischen Abtastvorgang.

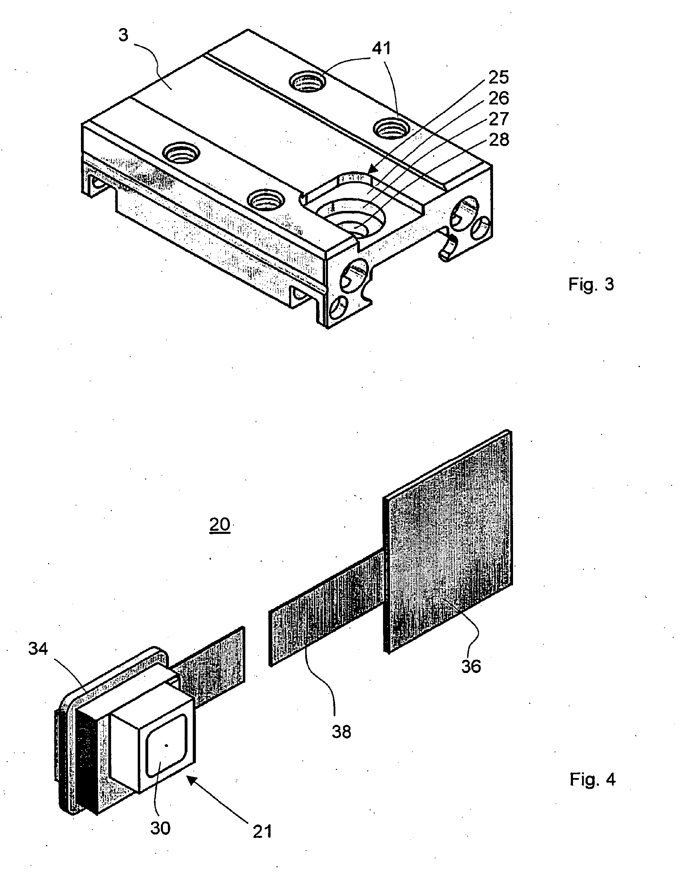

Fig. 3 zeigt den Führungswagen 3 im Detail (ohne die Wälzkörper und Führungen für die Wälzkörper). Der Führungswagen 3 ist in einer herkömmlichen Weise ausgebildet. Auf seiner Oberfläche, nämlich der Oberseite des Führungswagens 3, ist eine Ausnehmung 25 vorhanden, die zur Aufnahme des Messkopfes 21 dient. Die Ausnehmung 25 ist in einer ersten (oberen) Schicht als Nut 26 ausgebildet. Darunter liegend - also quasi in einer zweiten Schicht - ist die Ausnehmung zudem noch als Bohrung 27, aber nicht als durch den Führungswagen 3 durchgehende Bohrung zu erkennen. Die zweistufige Ausbildung der Ausnehmung 25 ist im vorliegenden Ausführungsbeispiel einerseits der vorgesehenen Form des Messkopfes 21 angepasst, führt aber andererseits zu einer optimalen Stabilität des Führungswagens 3 in Verbindung mit dem Messkopf 21. Es hat sich nämlich herausgestellt, dass eine Anordnung eines Messkopfes 21 in einer nach unten offenen Ausnehmung nachteilig ist für die Stabilität des Linearführungssystems.

Um eine optische Abtastung des Massstabs 10 mit dem Messkopf 21 zu ermöglichen, umfasst die Ausnehmung 25 eine weitere, nunmehr durch den Führungswagen 3 durchgehende Bohrung 28. Die Bohrung 28 wird möglichst klein gehalten, um für eine hohe mechanische Stabilität des Führungswagens 3 zu sorgen. Der Führungswagen 3 weist weiterhin 4 Gewindebohrungen 41 auf, um eine Last, die mit dem Linearführungssystem 1 geführt werden soll, am Führungswagen 3 befestigen zu können.

Fig. 4 zeigt Einzelheiten der Abtastvorrichtung 20. Diese umfasst:
- Den Messkopf 21, welcher aus einem optischen Sensor 30 und einem Sensorbefestigungselement 34, dessen äussere Kontur an die Form der Nut 26 angepasst ist, besteht;
- eine Versorgung 36, welche über ein Kabel 38 (oder alternativ mit einer Leiterplatte) mit dem Messkopf 21 verbunden ist und zusätzlich an eine (nicht dargestellte) Kontrolleinheit angeschlossen werden kann, um einerseits eine Versorgung des Messkopfes 21 mit Energie zu gewährleisten und einen Austausch von Steuer- und Messsignalen zwischen dem Messkopf 21 und der Kontrolleinheit zu ermöglichen.

Der Sensor 30 umfasst (nicht dargestellt) eine Lichtquelle zur Beleuchtung des Massstabs 10, einen optischen Detektor zum Erfassen des am Massstab 10 zurückgestreuten Lichts und eine elektronische Schaltung zur Verarbeitung von Detektorsignalen, welche eine Registrierung von Marken des Massstabs 10 ermöglicht. Ausgangssignale des Messkopfes 21 können von der Kontrolleinheit schliesslich in Daten umgesetzt werden, die einen von dem Führungswagen 3 bezüglich der Führungsschiene 2 zurückgelegten Weg und/oder die momentane Position des Führungswagens 3 bezüglich der Führungsschiene 2 angeben.

Wie die Fig. 2 und 5 zeigen, umfasst der Massstab 10 eine parallel zum Rand 2' der Fläche 2.1 verlaufende Inkrementalspur 11 mit einer Vielzahl von (äquidistanten) Marken 11' und eine Referenzspur mit Referenzmarken 12. Im vorliegenden Fall sind die Referenzmarken 12 neben der Inkrementalspur 11 angeordnet. Der Messkopf 21 ist so am Führungswagen 3 angeordnet, dass sowohl die Marken 12 der Referenzspur und die Marken 11' der Inkrementalspur 11 vom Messkopf 21 abgetastet werden können.

Im vorliegenden Fall ist eine Referenzmarke 12 im zentralen Bereich der Führungsschiene 2 (in etwa in der Mitte) zwischen zwei Löchern 15 angeordnet. Diese Anordnung ist insbesondere zweckmässig bei schmalen Führungsschienen 2, die nicht wesentlich breiter sind als der Durchmesser der Löcher 15 und dementsprechend wenig Platz für die Anordnung des Massstabs 10 bieten.

Fig. 6 verdeutlicht einen weiteren Vorteil dieser Anordnung. Fig. 6 zeigt die Führungsschiene 2 in einem Querschnitt für den Fall, dass die Führungsschiene 2 mit Befestigungsmitteln 16 (beispielsweise Schrauben) an einem Fundament (nicht dargestellt) befestigt ist. Durch die Befestigung kann die Oberfläche (Fläche 2.1) der Führungsschiene 2 insbesondere in der Umgebung der Löcher 15 bzw. der Befestigungsmittel 16 deformiert werden (die entsprechende Deformation ist in Fig. 6 übertrieben dargestellt).

Die entsprechende Änderung der Höhe der Führungsschiene 2 ist dabei am geringsten am Rand 2' sowie in der Mitte zwischen zwei Löchern 15. Durch eine Anordnung des Massstabs 10 in der Nähe des Randes 2' kann erreicht werden, dass der Massstab 10 (insbesondere die räumliche Lage der Marken 11' der Inkrementalspur 11) durch die Befestigung besonders wenig beeinflusst wird. Entsprechendes gilt für die Referenzmarken 12, die in der Mitte zwischen zwei Löchern 15 angeordnet sind. Die genannten Massnahmen führen deshalb zu einer höheren Messgenauigkeit der Messeinrichtung 5.

Um diesen Vorteil auszunutzen, ist es nicht notwendig, den Massstab 10 unmittelbar am Rand 2' anzuordnen. Der Vorteil ist in der Regel deutlich bemerkbar, wenn der Massstab 10 einen Abstand von dem Rand 2' der Führungsschiene 2 aufweist, welcher geringer als 25% der Breite der Führungsschiene 2 ist.

Die Fig. 7 stellt das Linearführungssystem 1 in einer Draufsicht dar und zeigt insbesondere die Anordnung des Messkopfes 21 und entsprechend die Anordnung der Ausnehmung 25 relativ zur Tragzone 40 des Führungswagens 3 (der Bereich des Führungswagens 3, der die Tragzone 40 bildet, ist in Fig. 7 durch ein gestricheltes Rechteck dargestellt). Der Führungswagen 3 wird konventionell über (längs einer geschlossenen Bahn) umlaufende Wälzköper 45 (beispielsweise Kugeln) an den Rändern 2' der Führungsschiene 2 abgestützt und in der Längsrichtung der Führungsschiene 2 geführt. Der Führungswagen 3 weist an gegenüberliegenden Seiten einen ersten Wälzkörperumlauf 46 und einen zweiten Wälzkörperumlauf 47 auf.

Diejenigen Wälzkörper 45 der Wälzkörperumläufe 46 und 47, über die der Führungswagen auf der Führungsschiene 2 abgestützt ist, sind durch eine auf den Führungswagen 3 wirkende Last belastbar und tragen somit den Führungswagen 3 (während die übrigen Wälzkörper nicht tragend wirken). Der Bereich des Führungswagens 3, der unmittelbar zwischen den tragenden Wälzkörpern liegt, bildet die Tragzone 40. Die Tragzone 40 bildet im vorliegenden Fall einen Teilbereich des Führungswagens 3. Wie Fig. 7 zeigt, ist die Ausnehmung 25 teilweise ausserhalb der Tragzone 40 ausgebildet und der Messkopf 21 in der Ausnehmung 25 teilweise ausserhalb der Tragzone 40 angeordnet. Dies ist - wie bereits dargelegt - vorteilhaft bezüglich der Tragfähigkeit, Steifigkeit und der Lebensdauer des Linearführungssystems 1.

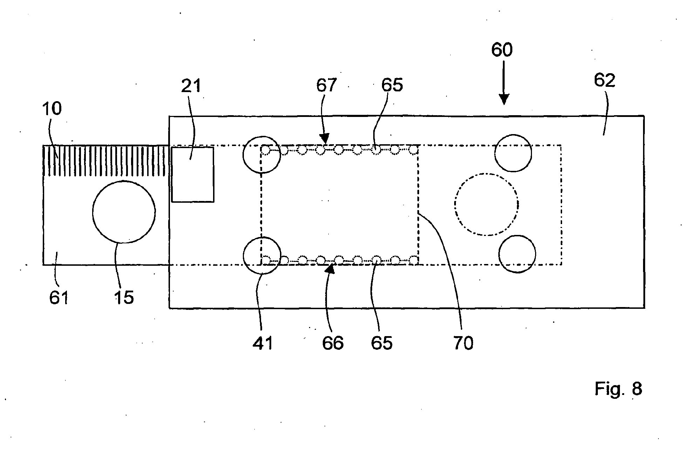

Fig. 8 zeigt ein Linearführungssystem 60 mit einer Führungsschiene 61 und mit einem über Wälzkörper 65 (beispielsweise Kugeln) auf der Führungsschiene 61 abgestützten Führungswagen 62. Zum Messen des von dem Führungswagen 62 gegenüber der Führungsschiene 61 zurückgelegten Weges ist die Messeinrichtung 5 gemäss Fig. 1 und 4 vorgesehen, wobei in Fig. 8 lediglich der Messkopf 21 und ein Abschnitt des Massstabs 10 der Messeinrichtung 5 dargestellt sind. Im Unterschied zum Linearführungssystem 1 bilden die Wälzkörper 65 des Linearführungssystems 60 keinen Wälzkörperumlauf. Die Wälzkörper 65 sind vielmehr in zwei Reihen 66 und 67 an gegenüberliegenden Rändern der Führungsschiene 61 angeordnet und werden durch konventionelle (nicht dargestellte) Käfige derart gehalten, dass benachbarte Wälzkörper 65 jeweils einen vorgegebenen Abstand aufweisen. Der Bereich des Führungswagens 62, der unmittelbar zwischen den Wälzkörpern der Reihen 66 und 67 liegt, bildet die (in Fig. 8 durch ein gestricheltes Rechteck gekennzeichnete) Tragzone 70 des Führungswagens 62. Im Unterschied zum Linearführungssystem 1 ändert sich im Falle des Linearführungssystems 60 die Lage der Tragzone 70 gegenüber dem Führungswagen 62, wenn der Führungswagen 62 in der Längsrichtung der Führungsschiene 61 bewegt wird. Gemäss Fig. 8 wird der Messkopf 21 in einer Ausnehmung (nicht sichtbar) im Führungswagen 62 derart an einem Ende des Führungswagens 61 angeordnet, dass die Ausnehmung - unabhängig von der Position des Führungswagens 62 - ganz oder teilweise ausserhalb der Tragzone 70 ausgebildet ist und der Messkopf 21 in der Ausnehmung ganz oder teilweise ausserhalb der Tragzone 70 angeordnet ist. Daraus resultieren dieselben Vorteile wie im Fall des Linearführungssystems 1.

Im Rahmen der vorliegenden Erfindung können die Führungswagen 3 bzw. 62 über andere Mittel als Walzkörper auf den jeweiligen Führungsschienen abgestützt werden, beispielsweise über Gleitflächen bzw. Gleitstützen.

## Patentansprüche

1. Linearführungssystem (1, 60)
mit zumindest einer Führungsschiene (2, 61),
mit zumindest einem Führungswagen (3, 62), der über Wälzkörper (45, 65) auf der Führungsschiene abgestützt und längs der Führungsschiene bewegbar ist,
mit einer Messeinrichtung (5) zum Messen eines von dem Führungswagen bezüglich der Führungsschiene zurückgelegten Weges und/oder zum Bestimmen einer Position des Führungswagens bezüglich der Führungsschiene, welche Messeinrichtung einen Massstab (10) und einen Messkopf (21) mit mindestens einem Sensor (30) zum Abtasten des Massstabs umfasst,
wobei der Massstab sich in der Längsrichtung der Führungsschiene erstreckt und an oder auf einer der Tragzone (40, 70) des Führungswagens zugewandten Fläche (2.1) der Führungsschiene angeordnet ist und
im Führungswagen (3) eine Ausnehmung (25) zur Aufnahme des Messkopfes (21) ausgebildet ist,
**dadurch gekennzeichnet, dass**
die Ausnehmung (25) teilweise ausserhalb der Tragzone (40, 70) ausgebildet ist und der Messkopf (21) ganz oder teilweise in der Ausnehmung (25) und teilweise ausserhalb der Tragzone (40, 70) angeordnet ist.

2. Linearführungssystem nach Anspruch 1, wobei die Ausnehmung (25) an einem bezüglich der Bewegungsrichtung des Führungswagen (3, 62) vorderen oder hinteren Ende des Führungswagens angeordnet ist.

3. Linearführungssystem nach Anspruch 1 oder 2, wobei
die Ausnehmung (25) eine Öffnung (26, 27, 28) an einer von der Führungsschiene (2) abgewandten Seite des Führungswagens (3) aufweist.

4. Linearführungssystem nach einem der Ansprüche 1-3, wobei der Massstab (10) aufweist: eine oder mehrere Inkrementalspuren (11) und/oder eine Referenzspur mit einer oder mehreren Referenzmarken (12) und/oder eine Spur mit einem sich längs der Führungsschiene erstreckenden, absoluten Codemarkenmuster zur Codierung einer absoluten Positionsinformation.

5. Linearführungssystem nach Anspruch 4, wobei der Messkopf (21) einen Sensor (30) umfasst, welcher derart angeordnet ist, dass sowohl die Inkrementalspur (11) als auch die Referenzspur mit dem Sensor (30) erfassbar ist.

6. Linearführungssystem nach Anspruch 4, wobei der Messkopf (21) einen ersten Sensor zum Abtasten der Inkrementalspur (11) und einen zweiten Sensor zum Abtasten der Referenzspur umfasst.

7. Linearführungssystem nach der Anspruch 4-6, wobei der Massstab an einem Rand (2') der Fläche (2.1) und/oder zwischen einem zentralen Bereich (15) der Fläche (2.1) und einem Rand (2') der Fläche (2.1) angeordnet ist.

8. Linearführungssystem nach Anspruch 7, wobei der Massstab (10) einen Abstand von dem Rand (2') aufweist, welcher geringer als 25% der Breite der Führungsschiene (2) ist.

9. Linearführungssystem nach einem der Ansprüche 7 oder 8,
wobei in einem zentralen Bereich der Führungsschiene Löcher (15) zur Befestigung der Führungsschiene (2, 61) ausgebildet sind.

10. Linearführungssystem nach den Ansprüchen 4 und 9, wobei mindestens eine Referenzmarke (12) zwischen zwei Löchern (15) angeordnet ist.

11. Linearführungssystem nach einem der Ansprüche 1-10, wobei eine Teilmenge der Wälzkörper (45) in einem ersten Wälzkörperumlauf (46) und eine andere Teilmenge der Wälzkörper (45) in einem zweiten Wälzkörperumlauf (47) angeordnet sind und der Führungswagen (3) an einem Rand der Tragzone (40) von Wälzkörpern (45) des ersten Wälzkörperumlaufs (46) und an einem anderen Rand der Tagzone (40) von Wälzkörpern (45) des anderen Wälzkörperumlaufs getragen wird.

12. Linearführungssystem nach einem der Ansprüche 1-10, wobei die Wälzkörper (65) zwischen dem Führungswagen (62) und der Führungsschiene (61) in zwei Reihen (66, 67) derart angeordnet sind, dass die Tragzone (70) des Führungswagens (62) ihre Lage bezüglich dem Führungswagen (62) bei einer Bewegung der Führungswagens (62) in der Längsrichtung der Führungsschiene (61) verändert.

## Claims

1. Linear guide system (1, 60)
with at least one guide rail (2, 61)
with at least one guide carriage (3, 62) which is supported by means of rolling bodies (45, 65) on the guide rail and can be moved along the guide rail,
with a measurement device (5) for measuring a distance travelled by the guide carriage with respect to the guide rail and/or for determining a position of the guide carriage with respect to the guide rail, which measurement device comprises a scale (10) and a measurement head (21) with at least one sensor (30) for scanning the scale,
wherein the scale extends in the longitudinal direction of the guide rail and is arranged at or on a face (2.1) of the guide rail, which face faces the supporting zone (40, 70) of the guide carriage,
and a recess (25) for accommodating the measurement head (21) is formed in the guide carriage (3),
**characterised in that**
the recess (25) is formed partially outside the supporting zone (40, 70) and the measurement head (21) is arranged wholly or partially in the recess (25) and partially outside the supporting zone (40, 70).

2. Linear guide system according to Claim 1, wherein the recess (25) is arranged on a front or rear end of the guide carriage with respect to the direction of movement of the guide carriage (3, 62).

3. Linear guide system according to Claim 1 or 2,
wherein the recess (25) has an opening (26, 27, 28) on a side of the guide carriage (3) which faces away from the guide rail (2).

4. Linear guide system according to one of Claims 1 to 3, wherein the scale (10) has: one or a plurality of incremental tracks (11) and/or a reference track with one or a plurality of reference marks (12) and/or a track with an absolute code mark pattern for coding absolute position information, which code mark pattern extends along the guide rail.

5. Linear guide system according to Claim 4, wherein the measurement head (21) comprises a sensor (30), which is arranged in such a manner that both the incremental groove (11) and the reference groove can be detected with the sensor (30).

6. Linear guide system according to Claim 4, wherein the measurement head (21) comprises a first sensor for scanning the incremental track (11) and a second sensor for scanning the reference track.

7. Linear guide system according to Claims 4 to 6,
wherein the scale is arranged on an edge (2') of the face (2.1) and/or between a central region (15) of the face (2.1) and an edge (2') of the face (2.1).

8. Linear guide system according to Claim 7, wherein the scale (10) has a distance from the edge (2') which is less than 25% of the width of the guide rail (2).

9. Linear guide system according to one of Claims 7 or 8, wherein holes (15) for fixing the guide rail (2, 61) are formed in a central region of the guide rail.

10. Linear guide system according to Claims 4 and 9,
wherein at least one reference mark (12) is arranged between two holes (15).

11. Linear guide system according to one of Claims 1 to 10, wherein a portion of the rolling bodies (45) are arranged in a first rolling body orbit (46) and another potion of the rolling bodies (45) are arranged in a second rolling body orbit (47), and the guide carriage (3) is supported on an edge of the supporting zone (40) by rolling bodies (45) of the first rolling body orbit (46) and on another edge of the supporting zone (40) by rolling bodies (45) of the other rolling body orbit.

12. Linear guide system according to one of Claims 1 to 10, wherein the rolling bodies (65) are arranged in two rows (66, 67) between the guide carriage (62) and the guide rail (61) in such a manner that the supporting zone (70) of the guide carriage (62) changes its position with respect to the guide carriage (62) when the guide carriage (62) moves in the longitudinal direction of the guide rail (61).

## Revendications

1. Système de guidage linéaire (1, 60)
comprenant au moins un rail de guidage (2, 61),
au moins un chariot de guidage (3, 62), qui est soutenu au moyen de corps de roulement (45, 65) sur le rail de guidage, et peut être déplacé le long du rail de guidage,
un dispositif de mesure (5) pour la mesure d'un chemin parcouru par le chariot de guidage par rapport au rail de guidage et/ou pour la détermination d'une position du chariot de guidage par rapport au rail de guidage, lequel dispositif de mesure comporte une règle graduée (10) et une tête de mesure (21) comprenant au moins un capteur (30) pour le balayage de la règle graduée,
la règle graduée s'étendant dans la direction longitudinale du rail de guidage et étant disposée sur une surface (2.1), tournée vers la zone porteuse (40, 70) du chariot de guidage, du rail de guidage et
un évidement (25) pour le logement de la tête de mesure (21) étant réalisé dans le chariot de guidage (3),
**caractérisé en ce que**
l'évidement (25) est réalisé en partie à l'extérieur de la zone porteuse (40, 70) et la tête de mesure (21) est disposée tout ou partiellement dans l'évidement (25) et en partie à l'extérieur de la zone porteuse (40, 70).

2. Système de guidage linéaire selon la revendication 1, l'évidement (25) étant disposé par une extrémité, avant ou arrière par rapport au sens de déplacement du chariot de guidage (3, 62), du chariot de guidage.

3. Système de guidage linéaire selon la revendication 1 ou 2, l'évidement (25) présentant une ouverture (26, 27, 28) sur un côté, opposé au rail de guidage (2), du chariot de guidage (3).

4. Système de guidage linéaire selon l'une quelconque des revendications 1 à 3, l'échelle graduée (10) présentant : une ou plusieurs pistes incrémentielles (11) et/ou une piste de référence avec un ou plusieurs repères de référence (12) et/ou une piste avec un modèle de repère de code absolu, s'étendant le long du rail de guidage, pour le codage d'une information de position absolue.

5. Système de guidage linéaire selon la revendication 4, la tête de mesure (21) comportant un capteur (30), qui est disposé de telle sorte que aussi bien la piste incrémentielle (11) que la piste de référence peuvent être enregistrées avec le capteur (30).

6. Système de guidage linéaire selon la revendication 4, la tête de mesure (21) comprenant un premier capteur pour le balayage de la piste incrémentielle (11) et un second capteur pour le balayage de la piste de référence.

7. Système de guidage linéaire selon les revendications 4 à 6, l'échelle graduée étant disposée sur un bord (2') de la surface (2.1) et/ou entre une zone (15) centrale de la surface (2.1) et un bord (2') et la surface (2.1).

8. Système de guidage linéaire selon la revendication 7, l'échelle graduée (10) présentant une distance au bord (2') qui est inférieure de 25 % à la largeur du rail de guidage (2).

9. Système de guidage linéaire selon l'une quelconque des revendications 7 ou 8, des trous (15) pour la fixation du rail de guidage (2, 61) étant réalisés dans une zone centrale du rail de guidage.

10. Système de guidage linéaire selon les revendications 4 à 9, au moins un repère de référence (12) étant disposé entre deux trous (15).

11. Système de guidage linéaire selon l'une quelconque des revendications 1 à 10, une quantité partielle des corps de roulement (45) étant disposée dans un premier pourtour du corps de roulement (46) et une autre quantité partielle des corps de roulement (45) dans un second pourtour de corps de roulement (47) et le chariot de guidage (3) étant porté sur un bord de la zone porteuse (40) de corps de roulement (45) du premier pourtour du corps de roulement (46) et sur un autre bord de la zone porteuse (40) de corps de roulement (45) de l'autre pourtour du corps de roulement.

12. Système de guidage linéaire selon l'une quelconque des revendications 1 à 10, les corps de roulement (65) étant disposés entre le chariot de guidage (62) et le rail de guidage (61) dans deux rangées (66, 67) de telle sorte que la zone porteuse (70) du chariot de guidage (62) modifie sa position par rapport au chariot de guidage (62) lors d'un déplacement du chariot de guidage (62) dans la direction longitudinale du rail de guidage (61).
